# EUROPEAN PATENT APPLICATION

(11) **EP 4 528 224 A1**
(43) Date of publication of application: **26.03.2025**
(21) Application number: 23856271.4
(22) Date of filing: 28.06.2023
(51) Int. Cl.: G01C 21/34, G01C 21/30

(54) **PATH PLANNING METHOD AND APPARATUS**

(30) Priority: 24.08.2022 CN 202211020211
(71) Applicant: Huawei Technologies Co., Ltd., Shenzhen, Guangdong 518129 (CN)
(72) Inventor: ZHU, Weiming, Shenzhen, Guangdong 518129 (CN); CHEN, Tianxiao, Shenzhen, Guangdong 518129 (CN); CHEN, Baoyang, Shenzhen, Guangdong 518129 (CN); LIU, Chuangchuang, Shenzhen, Guangdong 518129 (CN); WU, Zhaohui, Shenzhen, Guangdong 518129 (CN)
(74) Representative: Maiwald GmbH
(86) International application number: PCT/CN2023/103263
(87) International publication number: WO 2024/041180

(57) **Abstract**

Embodiments of this application provide a route planning method and apparatus. The method includes: An electronic device receives a first operation, and performs route planning based on a target graphic indicated by the first operation and a preset target region, to obtain a target route in the target region. The electronic device displays the obtained target route on a map. According to the route planning method in embodiments of this application, a proper route can be planned based on the target graphic specified by a user, to meet a personalized requirement of the user for route planning.

## Description

This application claims priority to Chinese Patent Application No. 202211020211.2, filed with the China National Intellectual Property Administration on August 24, 2022 and entitled "ROUTE PLANNING METHOD AND APPARATUS", which is incorporated herein by reference in its entirety.

### TECHNICAL FIELD

Embodiments of this application relate to the field of terminal devices, and in particular, to a route planning method and apparatus.

### BACKGROUND

With development of the field of terminal device technologies, a terminal device has increasing functions and increasing application scenarios. A user may plan a driving route by using a map application provided by the terminal device. Currently, in a route planning method on the terminal, the user usually specifies a start point and an end point, and the terminal plans a corresponding route based on the start point and the end point that are set by the user. In a route planning process, a route is usually planned according to a rule like a shortest route length or fewest traffic lights. A route planning manner is simple, and a personalized requirement of the user cannot be met.

### SUMMARY

Embodiments of this application provide a route planning method and apparatus. The method includes: An electronic device plans, based on an indication of a user, a route that meets a target graphic specified by the user, so that a personalized setting of the route can be implemented. This improves user experience.

According to a first aspect, an embodiment of this application provides a route planning method. The method includes: An electronic device receives a first operation. The received first operation indicates a target graphic. The electronic device determines a target route based on the target graphic indicated by the first operation and a target region on a map, where a similarity between a shape of the target route and a shape of the target graphic is greater than a preset threshold, the target route is in the target region, and the target region is set based on a location of the electronic device, or the target region is set based on a user operation. After determining the target route, the electronic device displays the target route on the map. In this way, in this embodiment of this application, the user can randomly set a graphic without any limitation. The electronic device can perform route planning based on the graphic set by the user, and obtain a route similar to the graphic set by the user, to meet a user requirement, so as to implement a personalized route setting. In addition, in this embodiment of this application, the electronic device performs route planning on the target region on the map, and planning is more purposeful, so that a success rate and efficiency of route planning can be effectively improved.

For example, the planned target route in this embodiment of this application includes a start point and an end point. The start point and the end point are automatically generated based on the planned route.

For example, the target route may be in any region in the target region.

For example, the electronic device may obtain a current location of the electronic device, and determine the target region based on the current location.

For example, a range of the target region may be a preset value, or may be determined based on a latest setting of the user.

For example, the target region may be a circle, a rectangle, or another geometry that centers on the current location of the electronic device.

For example, a center of the target region may alternatively be determined based on a user setting.

For example, the target region may cover a city, a town, or the like on the map. This is not limited in this application.

In a possible implementation, that the electronic device determines the target route based on the target graphic and the target region on the map includes: The electronic device obtains feature information of the target graphic in response to the received first operation, where the feature information describes a graphic feature of the target graphic. The electronic device determines the target route based on the feature information of the target graphic and the target region on the map. In this way, in this embodiment of this application, corresponding processing is performed on the target graphic, to obtain corresponding feature information. Therefore, a corresponding target route may be obtained by performing matching based on some graphic features of the target graphic. In other words, a graphic enclosed by the target route has a same graphic feature as the target graphic.

In a possible implementation, that the electronic device obtains the feature information of the target graphic in response to the received first operation includes: The electronic device performs abstraction processing on the target graphic, to obtain a target abstract graphic of the target graphic, where the target abstract graphic is used to describe a key point in the target graphic or a connection relationship between key points in the target abstract graphic. The electronic device obtains the feature information based on the target abstract graphic. In this way, in this embodiment of this application, for a target graphic requirement indicated by the user, the target graphic is output in a form of data descriptions, namely, the feature information, while an original key feature of the target graphic is unchanged, so that a target route that is of the graphic and that meets feature information descriptions can be constructed.

In a possible implementation, the feature information includes at least one of the following: connection feature information, geometric feature information, angle feature information, size feature information, and location feature information.

For example, the connection feature information may indicate a connection status between different geometries, and the connection feature information may include a connection point and an angle corresponding to the connection point.

For example, the geometric feature information indicates some geometries included in the graphic, for example, may include but is not limited to a diamond, a rectangle, or a circle.

For example, the size feature information indicates a size relationship between different geometries, and may also be understood as a size ratio.

For example, the location feature information may indicate a location relationship between different graphics.

In a possible implementation, that the electronic device determines the target route based on the feature information of the target graphic and the target region on the map includes: The electronic device performs matching on the target region on the map based on the feature information. The electronic device determines a successfully matched route as the target route.

In a possible implementation, that the electronic device determines the target route based on the feature information of the target graphic and the target region on the map includes: The electronic device performs matching on the target region on the map based on first feature information, to obtain at least one successfully matched first target subroute. The electronic device performs matching on a surrounding region of the at least one first target subroute based on second feature information, to obtain a successfully matched second target subroute, where the second target subroute is obtained by performing matching on a surrounding region of a third target subroute of the at least one first target subroute, the first feature information and the second feature information are partial information of the feature information, and the second target subroute and the third target subroute form the target route. In this way, in this embodiment of this application, a plurality of pieces of feature information included in the feature information is separately matched with routes in the target region, to obtain a target route that meets a characteristic constraint.

In a possible implementation, if a plurality of second target subroutes are obtained through matching, that the electronic device determines the target route based on the feature information of the target graphic and the target region on the map further includes: The electronic device receives a second operation, where the second operation is used to specify a target route from a route including the plurality of second target subroutes. The electronic device determines the target route in response to the received second operation. In this way, if a plurality of routes that meet the feature information constraint are obtained through matching, the user may specify the target route.

In a possible implementation, that the electronic device determines the target route based on the feature information of the target graphic and the target region on the map includes: determining a plurality of candidate routes based on the target graphic and the target region on the map; and determining the target route from the plurality of candidate routes based on a preset condition, where the preset condition includes at least one of the following: a similarity between the shape of the target route and the target abstract graphic is the highest, a length of the target route is the shortest, and the target route passes through a specified region, where the specified region is preset. In this way, if the plurality of routes are obtained by performing matching based on the constraint, the routes may be further filtered based on the preset condition, to obtain a route that better meets the constraint requirement.

In a possible implementation, that the electronic device receives the first operation includes: receiving the first operation performed on a first interface; and that the electronic device displays the target route on the map includes: displaying the target route on a map on a second interface, where the second interface is different from the first interface. In this way, in this embodiment of this application, a user setting interface, namely, the first interface, may be provided. The user may randomly set the target graphic on the first interface. After performing route planning based on the target graphic set by the user on the first interface, to obtain the target route, the electronic device may display the target route on the map on the second interface. In other words, when indicating the target graphic on the first interface, the user does not need to perform setting based on the map, for example, does not need to set the start point or the end point, does not need to select a route, and only needs to set any graphic based on an actual requirement of the user. This effectively reduces operation difficulty of the user, and an automatic and personalized route planning manner can be implemented without a need to manually select a route by the user.

In a possible implementation, the first operation indicates to draw the target graphic on the first interface.

In a possible implementation, the first interface is a gallery interface, and the gallery interface includes at least one locally stored graphic; and that the electronic device receives the first operation performed on the first interface includes: The electronic device determines the target graphic in response to the received first operation performed on the target graphic, where the target graphic is a graphic in the at least one graphic.

In a possible implementation, the first interface is a candidate graphic interface, and the candidate graphic interface includes at least one candidate graphic; and that the electronic device receives the first operation performed on the first interface includes: The electronic device determines the target graphic in response to the received first operation performed on a target candidate graphic, where the target candidate graphic is a graphic in the at least one candidate graphic. In this way, in this embodiment of this application, some candidate graphic may be preset for the user to select.

In a possible implementation, that the electronic device determines the target route based on the feature information and the target region includes: segmenting the target region, to obtain N target sub-regions, where N is a positive integer greater than 1; prioritizing the N target sub-regions based on target feature information, where a sub-region that includes more routes corresponding to the target feature information has a higher priority, and the target feature information is partial information of the feature information; and performing matching on the N target sub-regions one by one based on the feature information and a priority sequence of the N target sub-regions. In this way, in this embodiment of this application, the map is segmented, so that route matching can be performed in each map obtained through segmentation, to increase a route search speed.

In a possible implementation, that the electronic device displays the target route on the map on the second interface includes: The electronic device displays a key point on the target route on the map on the second interface.

In a possible implementation, that the electronic device displays the target route on the map on the second interface includes: displaying an entire route of the target route on the map on the second interface.

In a possible implementation, that the electronic device determines the target route based on the target graphic and the target region on the map includes: obtaining a current location of the electronic device; and determining the target region based on the current location of the electronic device and a target region range, where the target region range is a preset value, or the target region range is set by using a received region range setting operation.

In a possible implementation, the target region is set by using a latest received user operation.

According to a second aspect, an embodiment of this application provides a route planning apparatus. The apparatus includes a receiving module, a processing module, and a display module. The receiving module is configured to receive a first operation, where the first operation indicates a target graphic. The processing module is configured to determine a target route based on the target graphic and a target region on a map, where a similarity between a shape of the target route and a shape of the target graphic is greater than a preset threshold, the target route is in the target region, and the target region is set based on a location of an electronic device, or the target region is set based on a user operation. The display module is configured to display the target route on the map.

In a possible implementation, the processing module is specifically configured to: obtain feature information of the target graphic in response to the received first operation, where the feature information describes a graphic feature of the target graphic; and determine the target route based on the feature information of the target graphic and the target region on the map.

In a possible implementation, the processing module is specifically configured to: perform abstraction processing on the target graphic, to obtain a target abstract graphic of the target graphic, where the target abstract graphic is used to describe a key point in the target graphic or a connection relationship between key points in the target abstract graphic; and obtain the feature information based on the target abstract graphic.

In a possible implementation, the feature information includes at least one of the following: connection feature information, geometric feature information, angle feature information, size feature information, and location feature information.

In a possible implementation, the processing module is specifically configured to: perform matching on the target region on the map based on the feature information; and determine a successfully matched route as the target route.

In a possible implementation, the processing module is specifically configured to: perform matching on the target region on the map based on first feature information, to obtain at least one successfully matched first target subroute; and perform matching on a surrounding region of the at least one first target subroute based on second feature information, to obtain a successfully matched second target subroute, where the second target subroute is obtained by performing matching on a surrounding region of a third target subroute of the at least one first target subroute, the first feature information and the second feature information are partial information of the feature information, and the second target subroute and the third target subroute form the target route.

In a possible implementation, the processing module is specifically configured to: if a plurality of second target subroutes are obtained through matching, receive a second operation, where the second operation is used to specify the target route from a route including the plurality of second target subroutes; and determine the target route in response to the received second operation.

In a possible implementation, the processing module is specifically configured to: determine a plurality of candidate routes based on the target graphic and the target region on the map; and determine the target route from the plurality of candidate routes based on a preset condition, where the preset condition includes at least one of the following: a similarity between the shape of the target route and the target abstract graphic is the highest, a length of the target route is the shortest, and the target route passes through a specified region, where the specified region is preset.

In a possible implementation, the receiving module is configured to receive the first operation performed on a first interface. The display module is configured to display the target route on a map on a second interface, where the second interface is different from the first interface.

In a possible implementation, the first operation indicates to draw the target graphic on the first interface.

In a possible implementation, the first interface is a gallery interface, and the gallery interface includes at least one locally stored graphic; and the receiving module is configured to determine the target graphic in response to the received first operation performed on the target graphic, where the target graphic is a graphic in the at least one graphic.

In a possible implementation, the first interface is a candidate graphic interface, and the candidate graphic interface includes at least one candidate graphic; and the receiving module is configured to determine the target graphic in response to the received first operation performed on a target candidate graphic, where the target candidate graphic is a graphic in the at least one candidate graphic.

In a possible implementation, the processing module is configured to: segment the target region, to obtain N target sub-regions, where N is a positive integer greater than 1; prioritize the N target sub-regions based on target feature information, where a sub-region that includes more routes corresponding to the target feature information has a higher priority, and the target feature information is partial information of the feature information; and perform matching on the N target sub-regions one by one based on the feature information and a priority sequence of the N target sub-regions.

In a possible implementation, the display module is configured to display, on the map on the second interface, a key point on the target route.

In a possible implementation, the display module is configured to display an entire route of the target route on the map on the second interface.

In a possible implementation, the processing module is configured to: obtain a current location of the electronic device; and determine the target region based on the current location of the electronic device and a target region range, where the target region range is a preset value, or the target region range is set by using a received region range setting operation.

In a possible implementation, the target region is set by using a latest received user operation.

Any one of the second aspect and the implementations of the second aspect respectively correspond to any one of the first aspect and the implementations of the first aspect. For technical effects corresponding to any one of the second aspect and the implementations of the second aspect, refer to technical effects corresponding to any one of the first aspect and the implementations of the first aspect. Details are not described herein again.

According to a third aspect, an embodiment of this application provides a computer-readable medium, configured to store a computer program, where the computer program includes instructions for performing the method according to the first aspect or any possible implementation of the first aspect.

According to a fourth aspect, an embodiment of this application provides a computer program, where the computer program includes instructions for performing the method according to the first aspect or any possible implementation of the first aspect.

According to a fifth aspect, an embodiment of this application provides a chip, where the chip includes a processing circuit and a transceiver pin. The transceiver pin and the processing circuit communicate with each other through an internal connection path. The processing circuit performs the method according to any one of the first aspect or the possible implementations of the first aspect, to control a receive pin to receive a signal and a transmit pin to send a signal.

According to a sixth aspect, an embodiment of this application provides an electronic device. The electronic device includes one or more processors, a memory, and one or more computer programs. The one or more computer programs are stored in the memory. When the computer program is executed by the one or more processors, the electronic device is enabled to perform the method according to any one of the first aspect or the possible implementations of the first aspect.

### BRIEF DESCRIPTION OF DRAWINGS

FIG. 1 is a diagram of an example of a hardware structure of an electronic device;
FIG. 2 is a diagram of an example of a software structure of an electronic device;
FIG. 3 is a schematic flowchart of an example of a route planning method;
FIG. 4 is a diagram of an example of a user interface;
FIG. 5 is a diagram of an example of a user interface;
FIG. 6 is a diagram of an example of a user interface;
FIG. 7 is a diagram of an example of a user interface;
FIG. 8 is a diagram of an example of a user interface;
FIG. 9a to FIG. 9c are diagrams of examples of graphic classification processing manners;
FIG. 10 is a diagram of an example of an abstract processing process of a graphic "small fish";
FIG. 11 is a diagram of an example of an abstract processing process of a graphic "520";
FIG. 12 is a diagram of an example of map segmentation;
FIG. 13 is a diagram of an example of route matching on a region obtained through segmentation;
FIG. 14a to FIG. 14d are diagrams of examples of route matching;
FIG. 15 is a diagram of an example of route planning;
FIG. 16 is a diagram of an example of route planning;
FIG. 17 is a diagram of an example of an optimal route display manner;
FIG. 18 is a diagram of an example of an optimal route display manner;
FIG. 19 is a diagram of an example of a user interface;
FIG. 20 is a diagram of an example of an application scenario;
FIG. 21 is a diagram of an example of a graphic;
FIG. 22 is a diagram of an example of a structure of a route planning apparatus; and
FIG. 23 is a diagram of an example of a structure of an apparatus.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application.

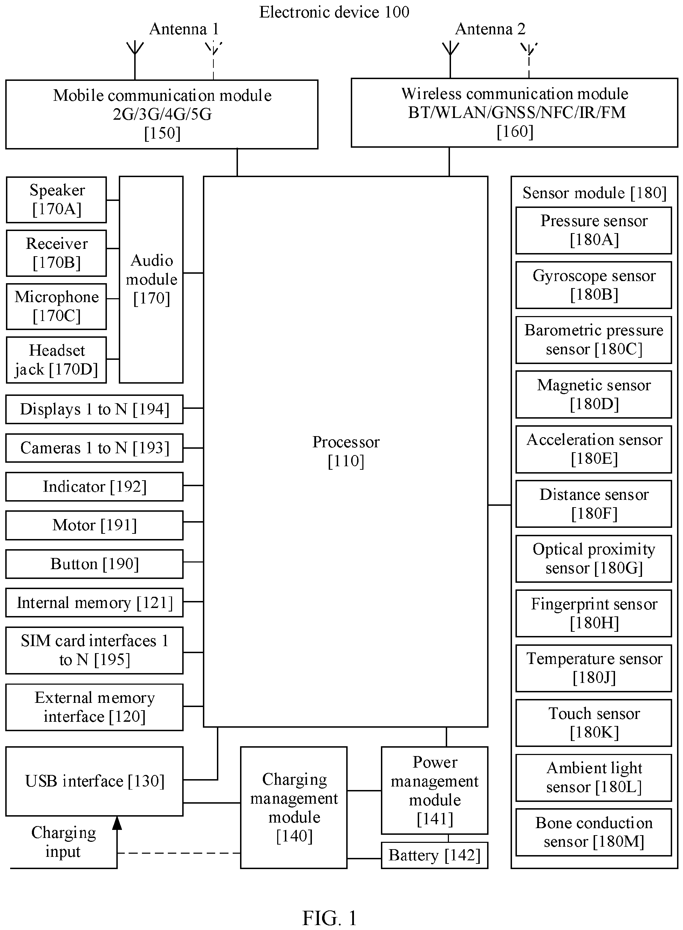

FIG. 1 is a diagram of a structure of an electronic device 100. It should be understood that the electronic device 100 shown in FIG. 1 is merely an example of the electronic device, and the electronic device 100 may have more or fewer components than those shown in the figure, or a combination of two or more components, or different component configurations. Various components shown in FIG. 1 may be implemented in hardware including one or more signal processing and/or application-specific integrated circuits, software, or a combination of hardware and software. It should be noted that the electronic device in embodiments of this application may be a device like a mobile phone, a tablet computer, a wearable device, or a vehicle-mounted device. In this embodiment of this application, only an example in which the electronic device 100 is the mobile phone is used for description. This is not limited in this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store the instructions or the data that have/has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus that includes a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and encode an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 110 and the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 and a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by using software. The GPIO interface may be configured as a control signal or a data signal. In some embodiments, the GPIO interface may be configured to connect the processor 110 and the camera 193, the display 194, the wireless communication module 160, the audio module 170, the sensor module 180, or the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB type-C interface, or the like. The USB interface 130 may be configured to connect to the charger to charge the electronic device 100, or may be configured to perform data transmission between the electronic device 100 and a peripheral device, or may be configured to connect to a headset for playing audio through the headset. The interface may be further configured to connect to another electronic device like an AR device.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal by using an audio device (which is not limited to the speaker 170A, or the receiver 170B), or displays an image or a video on the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting-diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is emitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scene. In some embodiments, the ISP may be disposed in the camera 193.

The camera 193 is configured to capture a static image or a video. An optical image of an object is generated through the lens, and is projected onto a photosensitive element. The photosensitive element may be a charge-coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, and simulates a biological neural network structure like a transmission mode between neurons in a human brain to perform rapid processing on input information, and can perform continuous self-learning. Applications such as intelligent cognition of the electronic device 100 may be implemented by using the NPU, for example, image recognition, facial recognition, speech recognition, and text understanding.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage region and a data storage region. The program storage region may store an operating system, an application required by at least one function (for example, a voice playing function or an image playing function), and the like. The data storage region may store data (such as audio data and an address book) created during use of the electronic device 100, and the like. In addition, the internal memory 121 may include a high-speed random access memory, or may include a non-volatile memory, for example, at least one magnetic disk storage device, a flash memory device, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode by using the speaker 170A.

The receiver 170B, also referred to as an "earpiece", is configured to convert an audio electrical signal into a sound signal. When a call is answered or speech message is received by using the electronic device 100, the receiver 170B may be put close to a human ear to listen to a voice.

The microphone 170C, also referred to as a "mike" or a "mic", is configured to convert a sound signal into an electrical signal. When making a call or sending speech message, the user may place the mouth of the user near the microphone 170C to make a sound, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force acts on the pressure sensor 180A, capacitance between electrodes changes. The electronic device 100 determines pressure intensity based on the change in the capacitance. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on a Messages application icon, an instruction for viewing an SMS message is performed. When a touch operation whose touch operation intensity is greater than or equal to the first pressure threshold is performed on the Message application icon, an instruction for creating a new message is performed.

The gyroscope sensor 180B may be configured to determine a motion posture of the electronic device 100. In some embodiments, an angular velocity of the electronic device 100 around three axes (axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement stabilization. The gyroscope sensor 180B may also be used in a navigation scenario and a somatic game scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall effect sensor. The electronic device 100 may detect opening and closing of a flip leather case by using the magnetic sensor 180D. In some embodiments, when the electronic device 100 is a clamshell phone, the electronic device 100 may detect opening and closing of a flip cover by using the magnetic sensor 180D. Further, a feature like automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in switching between a landscape mode and a portrait mode, a pedometer, or another application.

The distance sensor 180F is configured to measure a distance. The electronic device 100 may measure the distance in an infrared manner or a laser manner. In some embodiments, in a photographing scene, the electronic device 100 may measure a distance by using the distance sensor 180F, to implement quick focusing.

The optical proximity sensor 180G may include, for example, a light-emitting diode (LED) and an optical detector, for example, a photodiode. The light emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically perform screen-off for power saving. The optical proximity sensor 180G may also be used in a leather case mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G, to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing strategy based on the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142, to avoid abnormal shutdown caused by a low temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided on the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse, to receive a blood pressure beating signal. In some embodiments, the bone conduction sensor 180M may alternatively be disposed in the headset, to combine into a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different regions of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 may further be compatible with different types of SIM cards. The SIM card interface 195 may further be compatible with an external memory card. The electronic device 100 interacts with a network through the SIM card, to implement functions such as calling and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In this embodiment of this application, the Android system with a layered architecture is used as an example to illustrate a software structure of the electronic device 100.

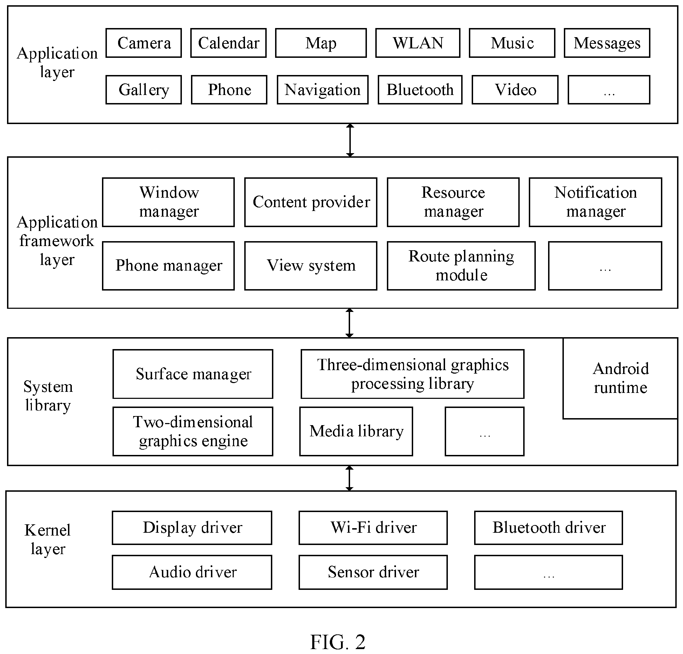

FIG. 2 is a block diagram of a software structure of an electronic device 100 according to an embodiment of this application.

In a layered architecture of the electronic device 100, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, a route planning module, and the like.

The window manager is configured to manage a window program. The window manager may obtain a size of the display, determine whether there is a status bar, perform screen locking, take a screenshot, or the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including a notification icon of Messages may include a view for displaying a text and a view for displaying an image.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message, which may automatically disappear after a short pause without requiring a user interaction. For example, the notification manager is configured to: notify download completion, give a message notification, and the like. The notification manager may alternatively be a notification that appears in a top status bar of the system in a form of graph or scroll bar text, for example, a notification of an application that is run on a background, or may be a notification that appears on the screen in a form of dialog window. For example, text information is prompted in the status bar, an alert sound is played, the electronic device vibrates, or the indicator light blinks.

The route planning module may be configured to: perform abstraction processing on input information input by an application (for example, a map application), to obtain an abstraction processing result; and perform matching on a map based on the abstract processing result, to obtain an optimal route.

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It can be understood that components included in the system framework layer, and the system library and runtime layer that are shown in FIG. 2 do not constitute any specific limitation on the electronic device 100. In some other embodiments of this application, the electronic device 100 may include more or fewer components than those shown in the figure, or a combination of a part of the components, or splits from a part of the components, or an arrangement of different components.

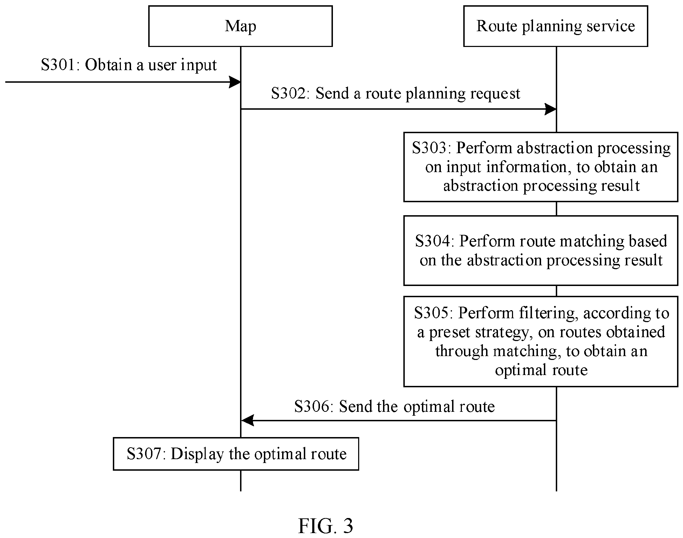

FIG. 3 is a schematic flowchart of an example of a route planning method. As shown in FIG. 3, the method specifically includes but is not limited to the following steps.

S301: Obtain a user input.

For example, a user may indicate, on an interface provided by a map application of a mobile phone, the mobile phone to plan a route based on a result selected by the user.

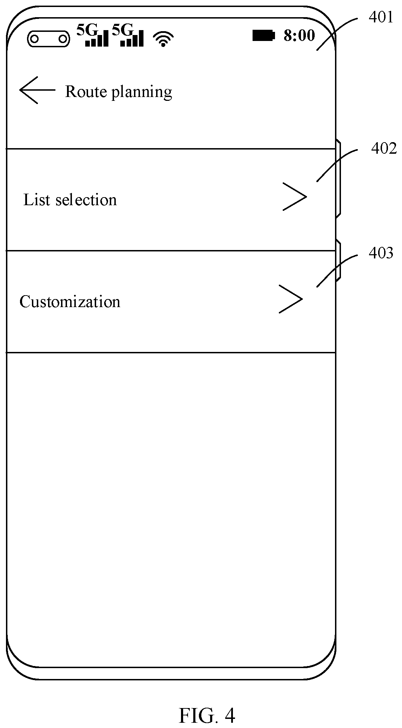

FIG. 4 is a diagram of an example of a user interface. As shown in FIG. 4, the map application (or may be another application, where the map application is merely used as an example for description in this application, and this is not limited in this application) may provide a route planning function. A route planning display interface 401 includes but is not limited to a list selection option 402 and a customization option 403.

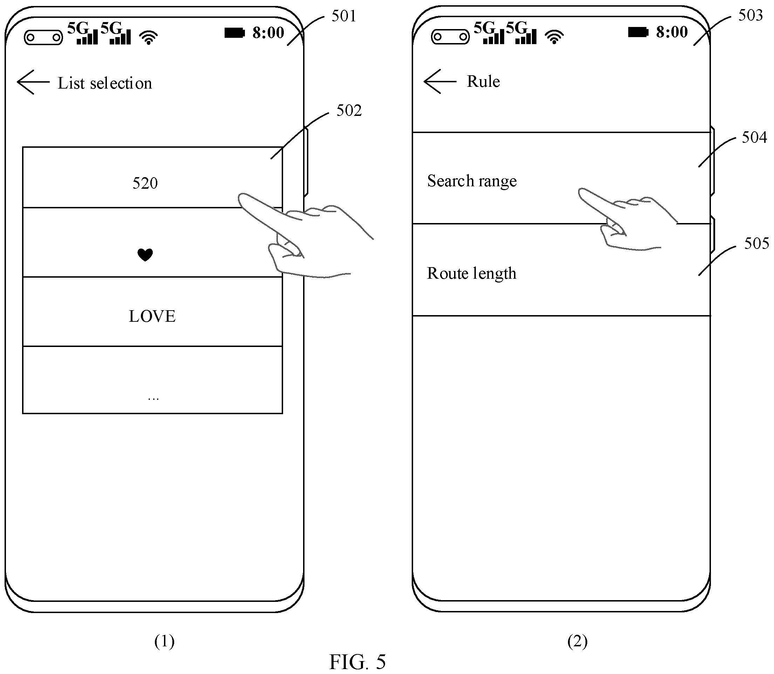

For example, in this embodiment of this application, some available graphics may be preset and presented in a list. For example, the user taps the list selection option 402. FIG. 5 is a diagram of an example of a user interface. As shown in (1) in FIG. 5, the map application displays a list selection interface 501 in response to a received operation of tapping the list selection option 402 by the user. The list selection interface 501 includes but is not limited to a list option 502. The list option 502 includes some graphics, for example, "520", a heart shape, and "LOVE". It should be noted that the graphic shown in FIG. 5 is merely an example, and this is not limited in this application.

Optionally, the graphic in embodiments of this application may be a character graphic, a geometry, or another simple or complex graphic. This is not limited in this application.

For example, the user may tap any graphic. An example in which the user taps "520" is used for description. As shown in (2) in FIG. 5, the map application displays a rule setting interface 503 in response to a received user operation. The rule setting interface 503 includes but is not limited to a search range setting option 504 and a route length setting option 505.

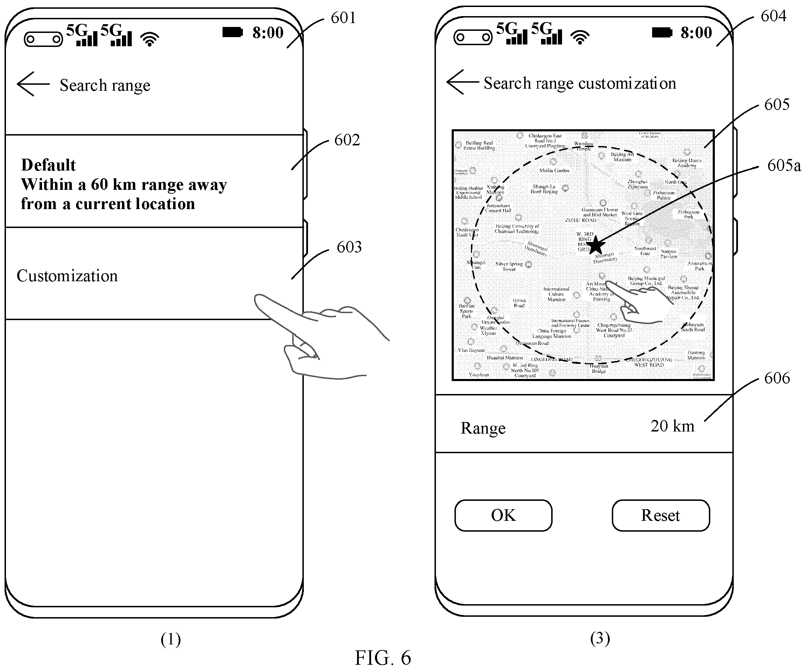

For example, the user taps the search range setting option 504. FIG. 6 shows an example of a user interface. As shown in (1) in FIG. 6, the map application displays a search range setting interface 601 in response to a received user operation. The search range setting interface 601 includes but is not limited to a default option 602 and a customization option 603.

Still as shown in (1) in FIG. 6, a default value of a search range may be displayed in the default option 602. In this embodiment of this application, the search range may also be understood as a target region on a map. In other words, the mobile phone performs route planning on the search range (the target region) on the map. In other words, the route planned by the mobile phone based on a user requirement is within the search range. In this embodiment of this application, the default value of the search range is optionally within a 60 km (kilometers) range away from a current location. The current location is a current location of the user (the mobile phone) that is obtained by invoking, by the map application, a positioning system (for example, a GPS system) of the mobile phone. Optionally, in embodiments of this application, the range may be a circular region centering on the current location, or certainly may be a rectangular region or a region of another shape. This is not limited in this application. It should be noted that a value (for example, the default value shown in (1) in FIG. 6) in embodiments of this application is merely an example, and may be set based on an actual requirement. This is not limited in this application, and details are not described below again.

Still as shown in (1) in FIG. 6, for example, the user may alternatively set, by tapping the customization option 603, a search range as required. As shown in (2) in FIG. 6, the map application displays a search range customization setting interface 604 in response to a received operation of tapping the customization option 603 by the user. For example, the search range customization setting interface 604 includes but is not limited to a search range preview box 605, a range setting option 606, a confirmation option, and a reset option.

For example, the search range preview box 605 may be used to display a map. The map may be obtained by the map application from a cloud, or may be obtained by the map application from a server of another map provider. This is not limited in this application. Optionally, the cloud in embodiments of this application may be the Huawei Cloud, and the cloud may include one or more servers.

For example, the user may slide on the map displayed in the search range preview box 605, and determine a search range center point in a manner like touching and holding (or another operation, which may be set based on an actual requirement, and is not limited in this application). For example, a center point 605a shown in (2) in FIG. 6 is the search range center point selected by the user.

For example, the user may set the search range in the range setting option 606. For example, the user may tap the search range setting option 606. The map application may display a numeric keyboard (or some optional range lists, which may be set based on an actual requirement, and is not limited in this application) in response to a received user operation. The user may input a required search range, for example, 20 km. The value may be set based on an actual requirement, and this is not limited in this application.

For example, in response to the search range center point (for example, the center point 605a) and the search range (for example, 20 km) that are specified by the user, the map application may display a corresponding search range in the search range preview box 605, namely, a circular region (which may alternatively be in another shape and is not limited in this application) that centers on the search range center point 605a and whose diameter is 20 km.

For example, the user may tap the confirmation option to determine the search range. The map application determines the search range in response to a received user operation. Optionally, the map application may display a current set range in the customization option 603 in (1) in FIG. 6, for example, may display a location of the center point (for example, an XX building, namely, the center point 605a) and the search range (for example, 20 km).

For example, the user may alternatively tap the reset option to reselect a search range center point and/or a search range.

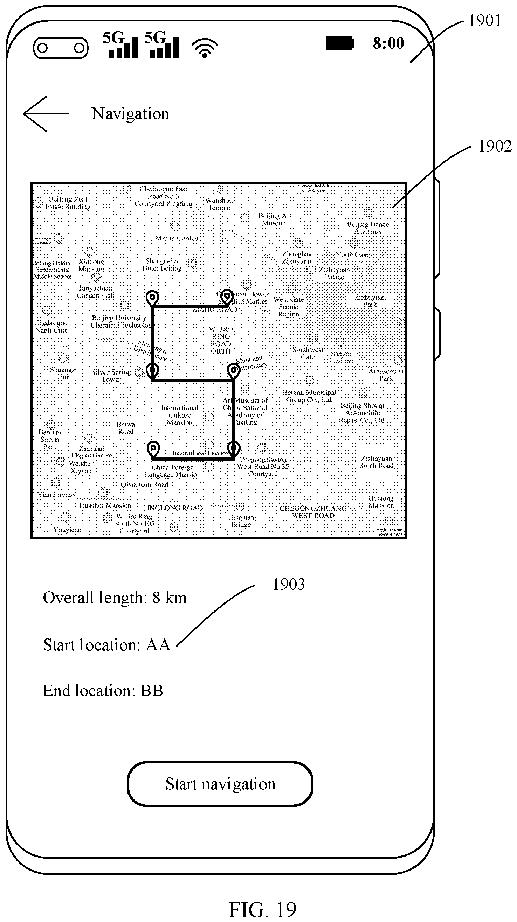

As shown in (2) in FIG. 5, for example, the user may further tap the route length setting option 505 to set a route length. For example, the route length is a maximum length of a finally planned route (for example, a route displayed in FIG. 19), that is, an overall length (a length) of the route planned by the mobile phone based on the user requirement is less than or equal to the set route length.

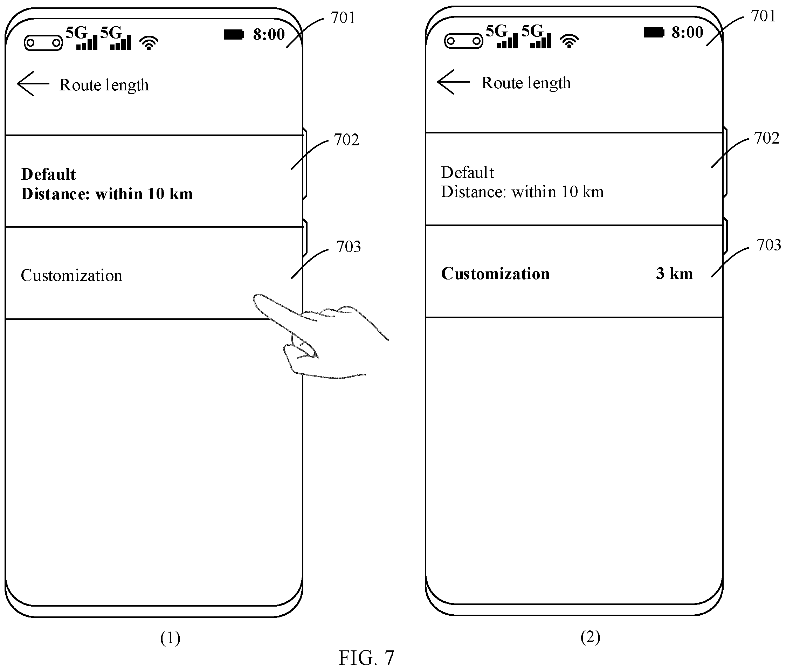

FIG. 7 is a diagram of an example of a user interface. As shown in (1) in FIG. 7, for example, the map application displays a route length setting interface 701 in response to a received operation of tapping the route length setting option 505 by the user. The route length setting interface 701 includes but is not limited to a default option 702 and a customization option 703.

For example, a default value of a route length may be displayed in the default option 702. In this embodiment of this application, the default value of the route length is optionally within 10 km, that is, a length of the planned route is less than or equal to 10 km.

For example, the user may alternatively tap the customization option 703, to set a route length as required. As shown in (2) in FIG. 7, the map application may display a numeric keyboard or some selectable route lengths (not shown in the figure) in response to a received operation of tapping the customization option 703 by the user. The map application may determine a customized route length, for example, 3 km, based on a received user input. Optionally, the map application may display, in the customization option 703, a value set by the user, for example, 3 km.

It should be noted that the user interface shown in this embodiment of this application is merely an example. An actual interface may include more or less content. In addition, a location, a size, and display content of each option may be set based on an actual requirement. This is not limited in this application, and details are not described below again.

For example, the map application may determine input information based on the received user operation. The input information may also be understood as a user requirement or a presented effect of a planned route expected by the user. The input information includes but is not limited to a graphic selected by the user (for example, "520" selected in (1) in FIG. 5), search range information, and route length information. The search range information and the route length information may be default values or may be user-customized values. This is not limited in this application.

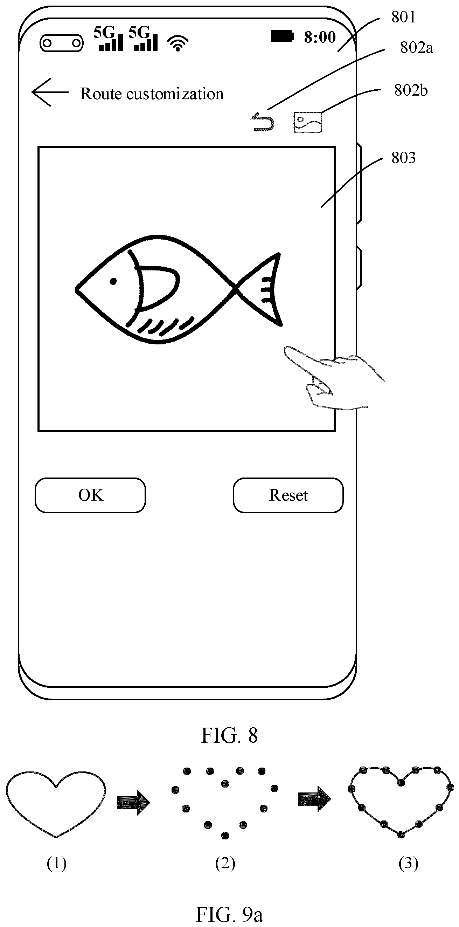

Still as shown in FIG. 4, as described above, the route planning setting interface 401 further includes the customization option 403. The option may provide a customization setting interface for the user, so that the user can set a graphic as required. An example in which the user taps the customization option 403 is used. FIG. 8 shows an example of a user interface. As shown in FIG. 8, the map application displays a route customization setting interface 801 in response to a received operation of tapping the customization option 403 by the user. The route customization setting interface 801 includes but is not limited to a cancel option 802a, a gallery option 802b, a graphic drawing box 803, a confirmation option, and a reset option.

For example, the cancel option 802a may be configured to cancel content that is most recently drawn by the user in the graphic drawing box 803.

For example, the gallery option 802b may be configured to invoke a gallery in the mobile phone. For example, if the user taps the gallery option 802b, the map application displays a gallery interface in response to a received user operation. The gallery interface may include at least one picture locally stored in the mobile phone. The user may select one or more pictures in the gallery. In response to a received user selection operation, the map application may display, in the graphic drawing box 803, the picture selected by the user. In other words, the picture in the gallery selected by the user is a user-customized graphic. Optionally, the user may further draw on the picture (the picture selected from the gallery) displayed in the graphic drawing box 803.

For example, the user may draw a graphic in the graphic drawing box 803, and the map application displays a corresponding graphic in response to a received user drawing operation. For example, as described above, the graphic in embodiments of this application may include a geometry, a character graphic, and another graphic.

Optionally, the graphic drawing box 803 may further display some drawing tools, such as a pencil tool, a filling tool, and a straight line drawing tool. This is not limited in this application.

For example, the user may tap the confirmation option, to confirm the drawn graphic. The map application obtains, in response to a received operation of tapping the confirmation option by the user, the graphic drawn by the user and/or the graphic selected by the user from the gallery.

For example, if the user taps the reset option, the map application clears content in the graphic drawing box 803 in response to a received user operation. The user may redraw a graphic in the graphic drawing box 803.

For example, after the user taps the confirmation option, the map may display, in response to a received user operation, the interface shown in (2) in FIG. 5, to further set the search range and/or the route length. For specific descriptions, refer to related content in (2) in FIG. 5 to FIG. 7. Details are not described herein again. In this example, after the user completes setting, the mobile phone may determine input information. The input information includes but is not limited to the graphic drawn by the user (which may alternatively be selected from the gallery), the search range information, and the route length information.

In a possible implementation, the mobile phone may alternatively receive an instruction sent by another device. The instruction may include input information, and the input information includes but is not limited to a graphic, search range information, and route range information. For example, a user B may perform settings in FIG. 5 to FIG. 8 on an electronic device B. After the graphic and other information (such as the search range information and the route range information) are set, the electronic device B may send the input information to an electronic device A of a user A, where the input information is the information such as the graphic. The electronic device A may continue to perform subsequent steps based on the received input information, to plan a route.

S302: The map application sends a route planning request to a route planning service.

For example, after obtaining the input information, the map application may send the route planning request to the route planning service. The route planning request includes but is not limited to the input information, and the route planning request is used to request the route planning service to perform route planning based on the input information.

It should be noted that, in a module interaction process in this embodiment of this application, interaction may alternatively be performed via a memory. For example, the map application may write the input information into the memory, and trigger the route planning service to read the input information in the memory. A module interaction manner described in this embodiment of this application is merely an example, and this is not limited in this application.

S303: The route planning service performs abstraction processing on the input information, to obtain an abstraction processing result.

For example, the route planning service obtains the input information in the route planning request, and may perform abstraction processing on the graphic based on the input information, to obtain an abstraction processing result corresponding to the graphic.

Specifically, after obtaining the input information, the route planning service obtains the graphic (referred to as a target graphic below) in the input information. For example, the graphic may be a small fish drawn in FIG. 8, or "520" selected from the list. As described above, "520" may be understood as a character graphic in graphics.

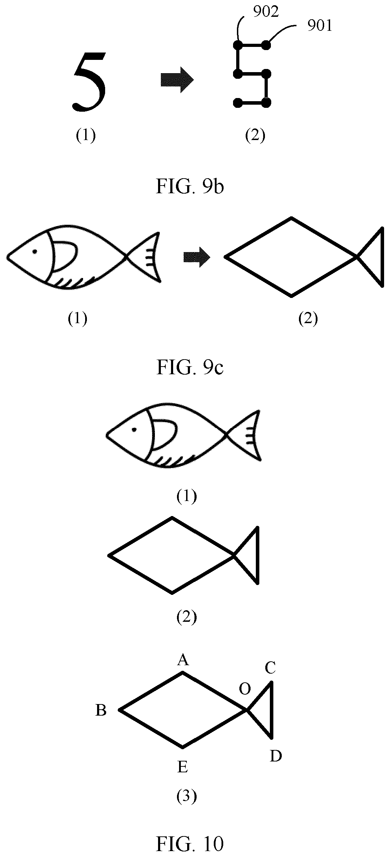

The route planning service may perform image recognition on the target graphic, to classify the target graphic. Optionally, the route planning service may preset some classifications. For example, in this embodiment of this application, graphic classifications include but are not limited to a character graphic, a geometry, and another graphic. For example, FIG. 9a to FIG. 9c are diagrams of examples of graphic classification processing manners. As shown in (1) in FIG. 9a, the graphic (the heart shape) is a geometry. As shown in (1) in FIG. 9b, the graphic ("5") is a character graphic. As shown in (1) in FIG. 9c, the graphic (the small fish) is another graphic, or may be understood as a complex graphic. It should be noted that the another graphic may be filled with a color. This is not limited in this application. Optionally, a manner in which the route planning service performs image recognition on the target graphic may be any feasible image recognition technology in the conventional technology. Details are not described in this application.

In this embodiment of this application, an abstraction processing process may be understood as a process in which a graphic is abstracted as a simple graphic or a simple line. For example, as shown in (2) in FIG. 9a, for a geometry, the route planning service may recognize a key point of the geometry, namely, a black dot in (2) in FIG. 9a. Optionally, a pattern including a plurality of scatter points (key points) shown in (2) in FIG. 9a is an abstract graphic corresponding to the geometry (the target graphic) shown in (1) in FIG. 9a. Optionally, the route planning service may further connect the scatter points (key points) by using a straight line. As shown in (3) in FIG. 9a, the graphic is the abstract graphic corresponding to the geometry shown in (1) in FIG. 9a.

For another example, as shown in (2) in FIG. 9b, for a character graphic (the character graphic "5" shown in (1) in FIG. 9a), an abstraction processing manner in route planning for this classification of graphics may be linearization. For example, the route planning service may recognize some feature points of the character "5", for example, black dots shown in (2) in FIG. 9b is the feature points of the character "5". The route planning service may connect the feature points, to obtain a linearized abstract graphic. As shown in (2) in FIG. 9b, the linearized abstract graphic is the abstract graphic corresponding to the character graphic "5" (the target graphic) shown in (1) in FIG. 9b.

For another example, as shown in (2) in FIG. 9c, for another graphic, for example, the small fish shown in (1) in FIG. 9c, the route planning service may perform abstraction processing in alignment, to obtain a simple geometry. As shown in (2) in FIG. 9b, the geometry is an abstract graphic corresponding to the target graphic (the "small fish" graphic).

The following briefly describes an abstraction process of each of the "small fish" graphic and the character graphic by using a specific example. It should be noted that in embodiments of this application, only some graphics are used as examples for description. Another similar graphic may be processed in an abstraction method in embodiments of this application. Examples are not described one by one in this application.

FIG. 10 is a diagram of an example of an abstract processing process of a graphic "small fish". As shown in (1) in FIG. 10, the graphic is the target graphic obtained by the route planning service from the input information. As shown in (2) in FIG. 10, the route planning service may perform image recognition on the "small fish" graphic, to recognize a contour of the "small fish" graphic. In addition, the route planning service determines a geometry that is the same as or approximate to the contour based on the recognized contour. For example, the contour of the "small fish" graphic can be abstracted into a diamond and a triangle. The foregoing abstraction manner may also be understood as a manner in which a detail (for example, a fish scale, a fish fin, or an eye) pattern of a complex graphic (the "small fish" graphic) is cleared, to obtain the contour of the "small fish" graphic, and the corresponding geometries (the abstract graphic) are obtained based on the contour.

In this embodiment of this application, after obtaining the abstract graphic, the route planning service may obtain feature information based on the abstract graphic.

In this embodiment of this application, the feature information includes but is not limited to connection information (which may also be referred to as cross information), angle information, size information, geometric information, and location information.

For example, the connection information indicates a connection status of different geometries. For example, as shown in (3) in FIG. 10, a point O is a connection point between a diamond ABOE and a triangle COD.

For example, the angle information indicates an angle in the geometry. For example, as shown in (3) in FIG. 10, an angle AOC may be 125°, a vertex angle COD of the triangle COD may be 120°, and two interior angles OCD and CDO each may be 30°. Certainly, the angle information may further include angle information of the diamond, and the like. Examples are not described herein one by one. Optionally, the angle information may include degrees of all angles in the abstract graphic, or may include a degree of at least one angle. This is not limited in this application.

For example, the size information indicates a ratio of sizes of a plurality of geometries. For example, as shown in (3) in FIG. 10, a size ratio of the diamond ABOE to the triangle COD may be 2:1. The value is merely an example. This is not limited in this application.

For example, the geometric information may also be referred to as graphic information, and indicates a geometry included in the abstract graphic. For example, as shown in (3) in FIG. 10, the geometric information includes the diamond ABOE and the triangle COD. In other words, the geometric information indicates that the abstract graphic of the "small fish" graphic includes the diamond and the triangle.

For example, the location information indicates a location relationship between scatters, lines, and/or the like in the abstract graphic. Optionally, the location relationship includes but is not limited to information such as a direction and location and/or a distance. For example, as shown in (2) in FIG. 9b, the route planning service may indicate a location relationship between scatters based on the location information. For example, a scatter 901 is on a right side of a scatter 902, and a distance between the two is 10 pixels.

It should be noted that the feature information described in embodiments of this application is merely an example. In another embodiment, the feature information may further include other information or any information combination, which intends to describe an abstract graphic.

In this embodiment of this application, for the abstract graphic (for example, shown in (3) in FIG. 10) of the "small fish" graphic, the feature information obtained by the route planning service may include but is not limited to the following information.
(1) Connection information: The point O is a crosspoint, there are two cross lines, and the point may also be understood as a "cross" crosspoint.
(2) Angle information: This includes angle values of the angle COD, the angle OCD, the angle CDO, an angle AOE, an angle OEB, and the like, which may include more or fewer values, and this is not limited in this application.
(3) Size information: The size ratio of the diamond ABOE to the triangle COD is 2:1.
(4) Geometric information: This includes the diamond ABOE and the triangle COD.

It may be understood that the feature information may describe information indicating that the abstract graphic of the "small fish" graphic includes the diamond ABOE and the triangle COD, where the connection point between the diamond ABOE and the triangle COD is the point O, and the point O is a "cross" crosspoint. In addition, the feature information further describes values of angles of the diamond ABOE and the triangle COD and angles at the connection point.

It should be noted that specific content and values of the information in embodiments of this application are merely examples, and are not limited in this application.

For example, the route planning service may obtain an abstract processing result corresponding to the "small fish" graphic (the target graphic) shown in (1) in FIG. 10, and the abstract processing result includes but is not limited to the feature information.

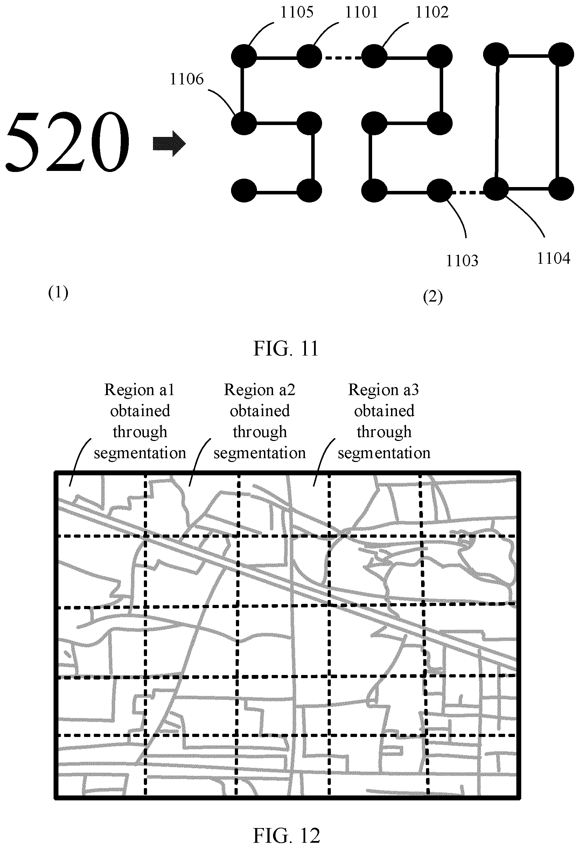

FIG. 11 is a diagram of an example of an abstract processing process of a graphic "520". As shown in (1) in FIG. 11, the graphic is the target graphic obtained by the route planning service from the input information. As described above, for a character graphic, the route planning service may extract key points of the target graphic, for example, black dots shown in (2) in FIG. 11, including but not limited to a scatter 1101, a scatter 1102, a scatter 1103, a scatter 1104, and a scatter 1105. In other words, scatters obtained after each character in the character "520" is abstracted.

For example, feature information corresponding to the abstract graphic may be obtained based on route information. The feature information may include location information and connection information between the scatters.

In a possible implementation, for a graphic (for example, as shown in (1) in FIG. 11) including a plurality of characters, the connection information may include connection relationships between the scatters in each character. Optionally, the connection information may further include connection relationships between the characters.

For example, location information corresponding to the abstract graphic shown in (2) in FIG. 11 may include but is not limited to that the scatter 1101 is on a right side of the scatter 1105, and a distance between the two is 10 pixels; a scatter 1106 is below the scatter 1105, and a distance between the two is 10 pixels; the scatter 1102 is on a right side of the scatter 1101, and a distance between the two is 20 pixels (or a distance may not be limited, which is not limited in this application); and the scatter 1104 is on a right side of the scatter 1103. The location information may include more information, and examples are not described one by one in this application.

The connection information may include but is not limited to that the scatter 1101 is connected to the scatter 1105, and the scatter 1106 is connected to the scatter 1105.

Optionally, the connection information may further include that the scatter 1101 is connected to the scatter 1102, and the scatter 1103 is connected to the scatter 1104. In other words, the connection information may further indicate a connection relationship between abstract graphics of different characters.

In this embodiment of this application, the feature information may also be understood as a route filtering condition. In a subsequent route planning process, the route planning service may perform matching based on the feature information, to obtain a route that meets the condition.

In a possible implementation, the route planning service may divide the feature information into coarse matching information and exact matching information. The coarse matching information may also be referred to as a coarse matching condition or coarse matching condition information, and may be used for coarse matching in a route matching process, to obtain a route that meets the coarse matching information. The exact matching information may also be referred to as an exact matching condition or exact matching condition information, and may be used to further perform exact matching on routes that are successfully matched in coarse matching, to select a route with a higher similarity. A specific implementation is described in detail below.

Optionally, the coarse matching information may include but is not limited to at least one of the following: the geometric information (for a concept, refer to the foregoing descriptions), the connection information, and the location information. Optionally, the exact matching information may include but is not limited to at least one of the following: the angle information, and the size information. It should be noted that a division manner (included content) of the coarse matching information and the exact matching information in embodiments of this application is merely an example, and is not limited in this application.

S304: The route planning service performs route matching based on the abstract processing result.

For example, as described above, after the route planning service performs abstraction processing on the target graphic, the abstraction processing result may be obtained. The abstract processing result may include the feature information or may include the geometric information, or the feature information includes the geometric information. For specific descriptions, refer to the foregoing descriptions. Details are not described herein again.

For example, as described above, the route planning service may divide the feature information, to obtain the coarse matching information and the exact matching information, which may also be referred to as the coarse matching condition and the exact matching condition. This is not limited in this application.

In this embodiment of this application, the route planning service may obtain map information from the cloud (for example, the Huawei Cloud) or a server of a map provider. The Huawei Cloud is used as an example. The route planning service may send request information to the cloud, to request the cloud to feed back the map information. Optionally, the request information may include the search range information described above, and is used to request a part of a region on the map, namely, a map of a range indicated by the search range information. In response to the received request information, the cloud feeds back the map to the electronic device (for example, the mobile phone) on which the route planning service is performed. Optionally, the information fed back by the cloud may be an entire map, or may be a part of the map (a map of the target region, where the target region is a region indicated by the search range). This is not limited in this application. Optionally, if the cloud feeds back the entire map (for example, a national map or a provincial map, which may be set based on an actual requirement, and is not limited in this application), the route planning service may perform route matching on the target region (the region indicated by the search range) on the map based on the feature information.

For example, after obtaining the map, the route planning service may perform matching on the target region on the map based on the coarse matching information, to obtain a route that meets the condition indicated by the coarse matching information.

In a possible implementation, the route planning service may segment the map of the target region, to obtain a plurality of regions obtained through segmentation. FIG. 12 is a diagram of an example of map segmentation. As shown in FIG. 12, for example, the route planning service divides the map into n regions, for example, including a region a_1 obtained through segmentation to a region a_n obtained through segmentation. Optionally, the route planning service may determine a graphic size area based on a shape of the abstract graphic and the route length set by the user as described above. The graphic size area is a maximum area that can be reached after the abstract graphic is mapped to the map based on a maximum route length. The route planning service can segment the target region based on the graphic size area and a total area of the target region. An area of each region obtained through segmentation is greater than or equal to the graphic size area. A specific segmentation manner may be set based on an actual requirement. This is not limited in this application.

For example, the route planning service prioritizes the regions obtained through segmentation based on at least one of coarse matching conditions. A region obtained through segmentation includes a larger quantity of routes that meet the condition has a higher priority. For example, the abstract graphic corresponding to the "small fish" graphic shown in (3) in FIG. 10 is still used as an example, the route planning service may perform matching, based on the connection information (cross information) in the feature information, on the regions obtained through segmentation, to detect whether the region obtained through segmentation includes a "cross" cross route and a quantity of included "cross" cross routes.

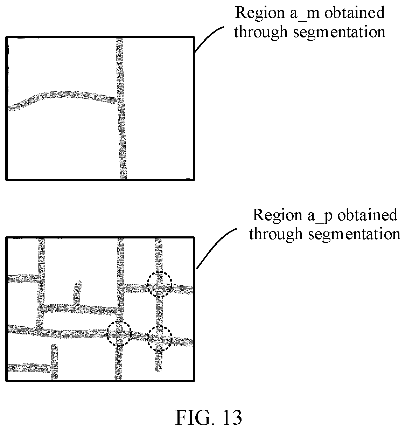

FIG. 13 is a diagram of an example of route matching on a region obtained through segmentation. As shown in FIG. 13, for example, a region a_m obtained through segmentation and a region a_p obtained through segmentation are used as an example. For example, the route planning service performs matching, based on the connection information, on routes in the region a_m obtained through segmentation and the region a_p obtained through segmentation. A matching result is that the region a_m obtained through segmentation does not include a cross route indicated by the connection information, and the region a_p obtained through segmentation includes at least three cross routes indicated by the connection information. Correspondingly, a priority of the region a_p obtained through segmentation is higher than a priority of the region a_m obtained through segmentation.

Optionally, for a region obtained through segmentation (for example, the region a_m obtained through segmentation) that does not include a "cross" cross route, a priority of the region may be set to 0, that is, in a subsequent matching process, matching may not be performed on the region that is obtained through segmentation and whose priority is 0, to reduce a total quantity of retrieval times (which may also be understood as matching times) of route matching.

For example, the route planning service may perform matching, one by one based on other information (or referred to as conditions) in the coarse matching information and in a priority sequence, on the regions obtained through segmentation, to obtain a successfully matched route.

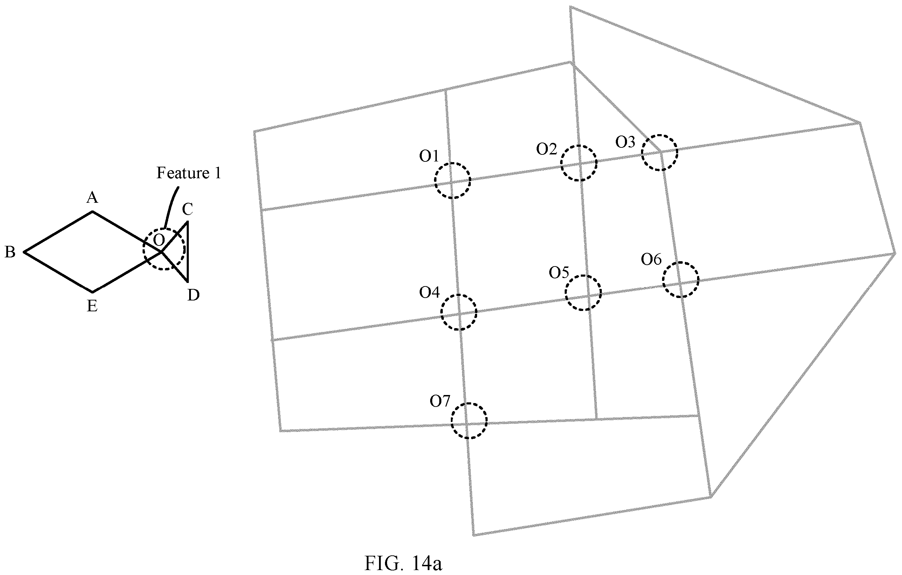

FIG. 14a to FIG. 14c are diagrams of examples of route matching. As shown in FIG. 14a, the abstract graphic in (3) in FIG. 10 and the corresponding feature information are still used as an example for description. For example, as described above, in the feature information corresponding to the abstract graphic, the coarse matching information may include but is not limited to the connection information and the geometric information. It may be understood that the connection information indicates a cross route. The geometric information indicates that the diamond and the triangle are connected to the cross route. For specific descriptions, refer to the foregoing embodiments, and details are not described herein again.

As shown in FIG. 14a, for example, the route planning service may perform matching, based on the connection information, on the region obtained through segmentation (the region obtained through segmentation is merely an example, and this is not limited in this application), to obtain (or retrieve or detect) a cross route that meets the connection information.

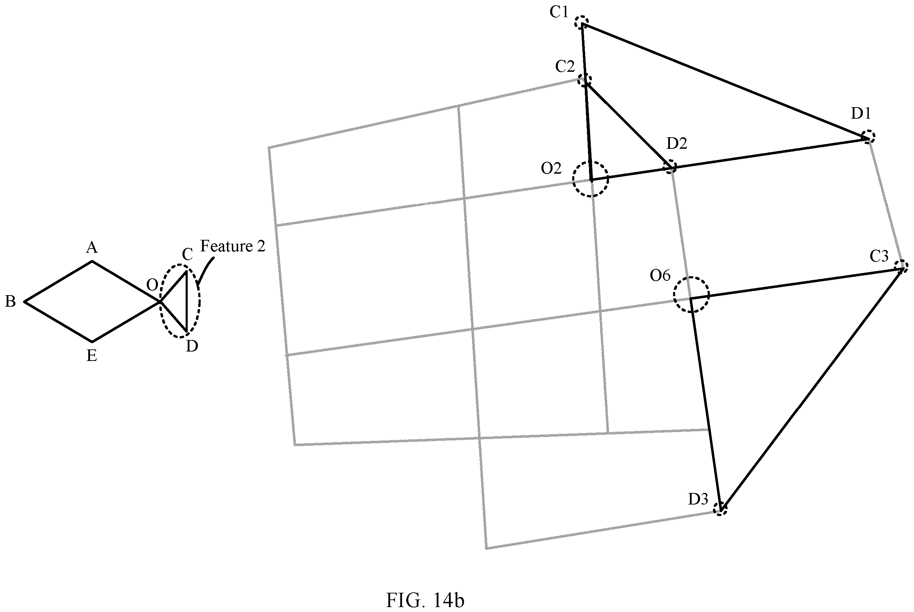

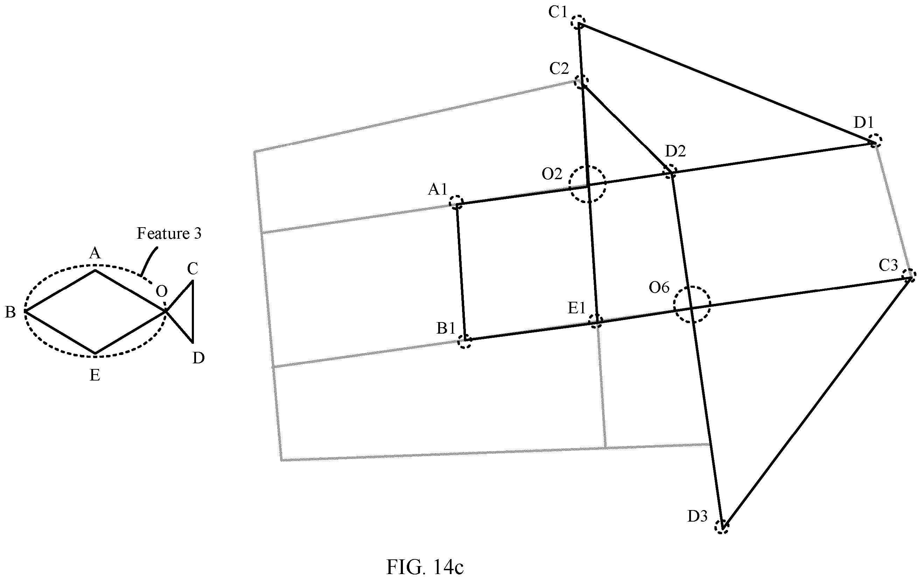

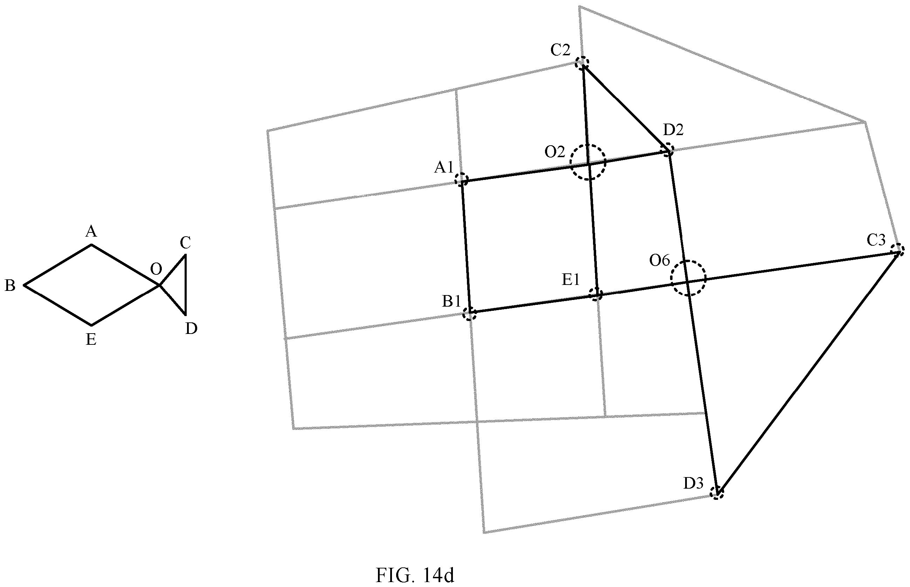

As shown in FIG. 14, the route planning service obtains, through matching, a plurality of cross routes that meet the connection information and that include O1 to O7, that is, O1 to O7 are all crosspoints corresponding to the "cross" cross routes.

The route planning service continues to perform matching, based on the geometry indicated by the geometric information, on the region obtained through segmentation, to obtain a route that meets the geometric information. As shown in FIG. 14b, for example, the route planning service detects whether routes connected to O1 to O7 include a route whose shape is a triangle. For example, the route planning service detects that O2-C1-D1 forms a triangle, O2-C2-D2 forms a triangle, and O6-C3-D3 forms a triangle. In other words, the foregoing routes meet the triangle graphic required by the geometric information.

For example, the route planning service continues to perform detection, to determine whether routes connected to O2 and O6 include a route whose shape is a diamond. For example, as shown in FIG. 14c, the route planning service detects that A1-O2-E1-B1 and O2-D2-O6-E1 are diamond (or approximate diamond) routes.

It should be noted that, in the foregoing embodiment, that the route planning service first performs matching, to obtain the cross route and then sequentially performs matching, to obtain a triangle route and a diamond route is merely used as an example for description. In another embodiment, the route planning service may perform matching in another sequence, or may perform parallel matching based on a plurality of conditions. This is not limited in this application.

For example, the route planning service performs matching based on the coarse matching information, and obtained routes include but are not limited to: O2-A1-B1-E2-O2-C2-D2, O2-A1-B1-E2-O2-C1-D1, and O6-D2-O2-E1-O6-C2-D3.

In a possible implementation, the route planning service may not segment the map. In other words, the route planning service may perform route matching on the target region on the map based on the feature information. A matching manner is the same as that (described in FIG. 14a to FIG. 14c) described above, and details are not described herein again.

S304: The route planning service performs filtering, according to a preset strategy, on the routes obtained through matching, to obtain an optimal route.

For example, the route planning service may perform further matching (or filtering), based on the feature information, on the routes that are successfully matched in S303, to obtain the optimal route. Optionally, the optimal route may include one or more routes.

For example, FIG. 14d is a diagram of an example of an exact matching process. As shown in FIG. 14d, for example, as described above, the route planning service performs matching based on the coarse matching information, and the obtained routes include but are not limited to: O2-A1-B1-E2-O2-C2-D2, O2-A1-B1-E2-O2-C1-D1, and O6-D2-O2-E1-O6-C2-D3. The route planning service may perform further matching on the routes according to the preset strategy, to obtain the optimal route.

Optionally, the preset strategy may include but is not limited to the exact matching information and the route length information (a route length range set by the user in the foregoing embodiments). The route length information indicates that a length of the route obtained through matching is less than or equal to the route length indicated by the route length information.

Optionally, the exact matching information includes but is not limited to the angle information and the size information. For example, the angle information may include the values of angles in the abstract graphic, and the size information indicates the size ratio of the diamond to the triangle.

For example, the route planning service may set a corresponding matching range for information in the exact matching information. For example, the angle information indicates that the angle COD is 120°. For example, the route planning service may set an angle range to ±30° (which may be set based on an actual requirement, and is not limited in this application). In other words, a range of the angle COD indicated by the exact matching information is [90°, 150°]. A range of another angle is similar to this. This is not described herein again.

For example, the route planning service may further set a range for the size information in the exact matching information. For example, original size information indicates that the ratio is 2:1, and the route planning service may expand this condition to a ratio of 0.5 (1:2) to 3 (3:1). The condition may be set based on an actual requirement. This is not limited in this application.

Still as shown in FIG. 14d, for example, the route planning service may determine, based on the information (including the set range) in the exact matching information, that successfully matched routes (optimal routes) include O2-A1-B1-E2-O2-C2-D2 and O6-D2-O2-E1-O6-C2-D3.

In a possible implementation, when the route planning service obtains a plurality of optimal routes by performing matching based on the exact matching information, the route planning service may further obtain, through matching, a route whose conditions are closest to conditions defined by the exact matching information, namely, the optimal route. For example, in the route O2-A1-B1-E2-O2-C2-D2, a size ratio of a diamond O2-A1-B1-E2 to a triangle O2-C2-D2 is 2:1. In the route O6-D2-O2-E1-O6-C2-D3, a size ratio of a diamond O6-D2-O2-E1 to a triangle O6-C2-D3 is 1:2. In this case, the size ratio in the route O2-A1-B1-E2-O2-C2-D2 is closer to the size ratio (2:1) indicated by the size information in the exact matching information. The route O2-A1-B1-E2-O2-C2-D2 is the optimal route.

In another possible implementation, when the route planning service obtains a plurality of optimal routes by performing matching based on the exact matching information, the route planning service may send the plurality of optimal routes to the map application. The map application may display the plurality of optimal routes, and the user may select one of the plurality of optimal routes as the optimal route. The map application determines the optimal route in response to a received user selection operation.

In still another possible implementation, when the route planning service obtains a plurality of optimal routes by performing matching based on the exact matching information, the route planning service may alternatively select a route whose semantics is closest to semantics of the target graphic as the optimal route. For example, the route planning service may perform semantic recognition on the target graphic, to obtain a semantic recognition result of the graphic, and the route planning service may perform semantic recognition on a graphic enclosed by the optimal route, to obtain a semantic recognition result of the route. A specific manner of semantic recognition may be any feasible manner in embodiments in the conventional technology. This is not limited in this application. The route planning service may separately match a plurality of obtained semantic recognition results of the routes with the semantic recognition result of the graphic, to obtain a route with closest semantics, for example, a route whose semantics similarity is less than or equal to a preset threshold.

It may be understood that, in this embodiment of this application, a similarity between the abstract graphic and the graphic enclosed by the optimal route determined by the route planning service is greater than or equal to the preset similarity threshold. In other words, the exact matching process may be understood as a similarity evaluation process. The route planning service may further obtain a route with a highest shape similarity to the abstract graphic by performing matching based on the condition indicated by the exact matching information.

For example, evaluation conditions of the similarity may be various. In an example, the similarity may be evaluated based on a geometric similarity. It may also be understood that a higher geometric similarity between a geometry enclosed by the route and the abstract graphic (which may also be understood as a shape of the target graphic) indicates a higher matching degree. For example, a difference between a size ratio of the geometries in the route and the size ratio indicated by the size information in the feature information is less than or equal to a threshold, or it may be understood that a size similarity is greater than or equal to the threshold. A smaller difference indicates a higher size similarity (geometric similarity) corresponding to the route. Optionally, the geometric similarity may be evaluated based on an angle, a location, or the like. For example, a difference between an angle in a shape enclosed by the route and an angle indicated in the angle information is less than or equal to a threshold, that is, an angle similarity is greater than or equal to the threshold. A smaller difference indicates a higher angle similarity (geometric similarity) corresponding to the route. In another example, the similarity may alternatively be evaluated based on a semantics similarity. In other words, as described above, a closer semantic recognition result indicates a higher similarity. It should be noted that the thresholds described in this application may be set based on an actual requirement. This is not limited in this application.

For example, the route planning service may perform further matching on the optimal route based on the route length information, to detect whether the optimal route is less than or equal to the route length range, where a route length of the optimal route needs to be less than or equal to a route length indicated by the route length information. Optionally, the route planning service may first perform route length information matching on a route obtained in a coarse matching process, and then perform exact matching. This is not limited in this application.

In a possible implementation, when the route planning service obtains a plurality of optimal routes by performing matching based on the exact matching information, the route planning service may select a route with a shortest route length as the optimal route.

In another possible implementation, the user may alternatively select a specified route or location in a phase of setting the target graphic. Correspondingly, when the route planning service obtains a plurality of optimal routes by performing matching based on the exact matching information, a route passing through the specified route or location may be used as the optimal route. Certainly, when the user selects the specified route or location, the route planning service may alternatively use this condition as a coarse matching condition in a coarse matching phase. This is not limited in this application.

It should be noted that the coarse matching condition and the exact matching condition in embodiments of this application are merely examples. During actual application, the user may further customize more route matching conditions. For example, the user may set to match a route passing through a largest quantity of shade places or a largest quantity of schools. This is not limited in this application.

In still another possible implementation, the route planning service may alternatively synchronously perform coarse matching and exact matching. For example, after obtaining the cross route through matching, the route planning service may detect angles of the cross route based on the angle information. If the angle is within the angle range indicated by the angle information, the cross route is the successfully matched cross route.

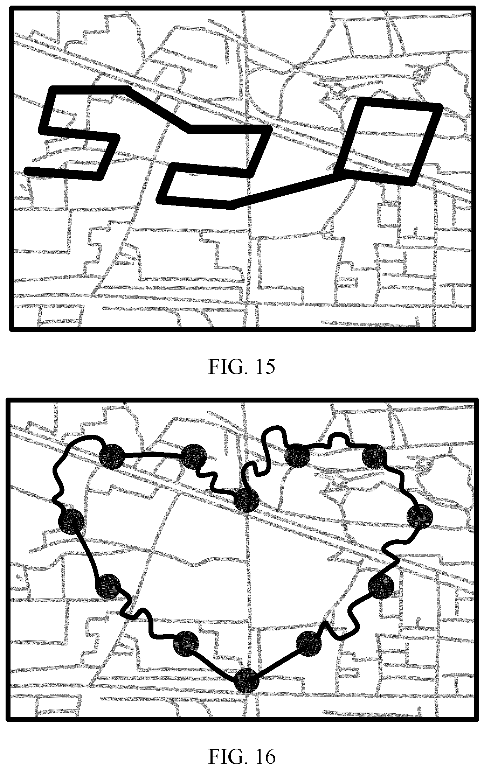

FIG. 15 is a diagram of an example of route planning. As shown in FIG. 15, for example, in an example in which the target graphic is a character graphic, the route planning service may obtain a corresponding route by performing matching based on the corresponding feature information. As shown in FIG. 15, a shape enclosed by the route is similar to the abstract graphic shown in (2) in FIG. 11.

FIG. 16 is a diagram of an example of route planning. As shown in FIG. 16, for example, for the geometry shown in FIG. 9a, the route planning service may form an optimal route based on a route between two scatters on the map. In other words, during route planning, a connection route between the scatters may not be a curve or a straight line, but a route of any shape. This is not limited in this application.

S306: The route planning application sends the optimal route to the map application.

For example, after determining the optimal route, the route planning service may send the optimal route to the map application. Optionally, the optimal route sent in the route planning includes but is not limited to a start point and an end point of the route, and the route.

S307: The map application displays the optimal route.

For example, the map application may determine the start point, the end point, and the route in response to the obtained optimal route. The map application may display the optimal route in the target region on the map.

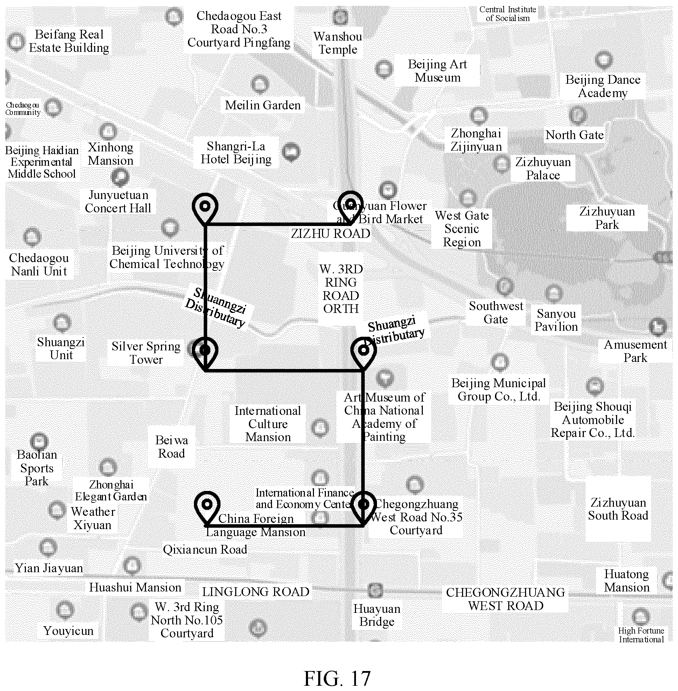

FIG. 17 is a diagram of an example of an optimal route display manner. As shown in FIG. 17, for example, the map application may display an entire route and at least one key waypoint of the optimal route based on the obtained optimal route. The key waypoint is any point on the optimal route.

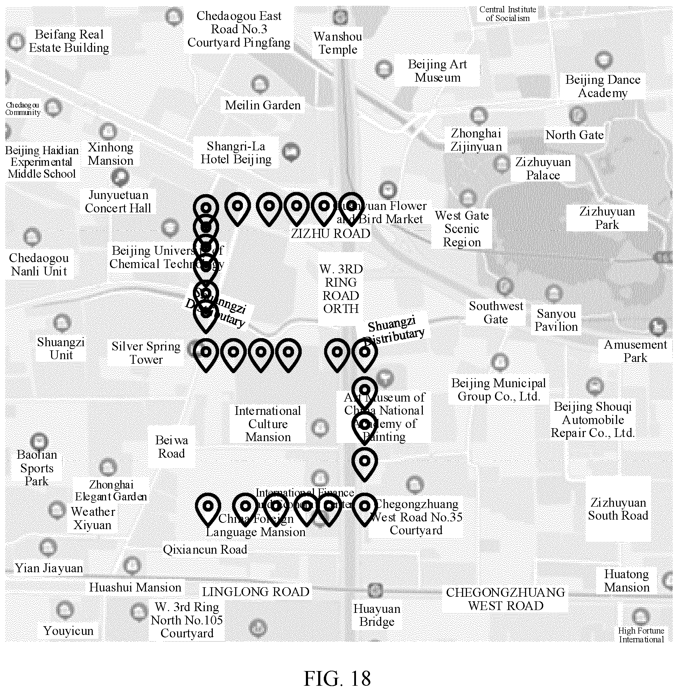

FIG. 18 is a diagram of an example of an optimal route display manner. As shown in FIG. 18, for example, the map application may display a plurality of key waypoints of the optimal route based on the obtained optimal route.

The route planning service may display the optimal route in any manner in FIG. 17 or FIG. 18. This is not limited in this application.

FIG. 19 is a diagram of an example of a user interface. As shown in FIG. 19, for example, a navigation interface 1901 of the map application may include a route display box 1902, route information 1903, and a start navigation option. The route display box 1902 may be used to display the map and the optimal route on the map. The route information 1903 may include but is not limited to the route length (for example, an overall length 8 km), start location information, and end location information.

For example, the user may tap the start navigation option, to indicate the map application to perform navigation based on the optimal route and a location of the user. The map application starts navigation in response to a received user operation.

In a possible implementation, if the route planning service fails to obtain, through matching, a route that meets the feature information and the route length information, the route planning service may send matching failure information to the map application, to indicate that no optimal route is obtained. The map application may display matching failure prompt information, to prompt the user to reset the input information, which includes resetting the target graphic, the search range, the route length, and/or the like.

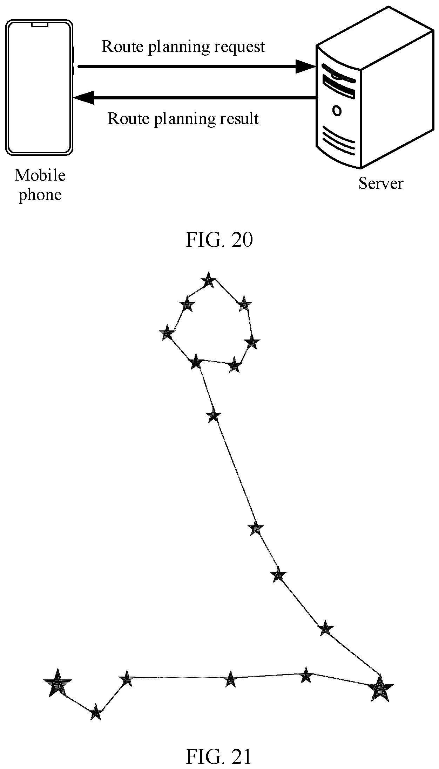

In another possible implementation, FIG. 20 is a diagram of an example of an application scenario. As shown in FIG. 20, the application scenario includes a mobile phone and a server. The mobile phone may be configured to obtain the input information, and the mobile phone sends the route planning request to the server. The server may perform optimal route matching based on the route planning request. In other words, the route planning service in the foregoing embodiments is set in the server. After obtaining the optimal route, the server sends a route planning result to the mobile phone, where the route planning result includes the optimal route. For a part that is not described, refer to the foregoing descriptions. Details are not described herein again.

In still another possible implementation, for a list selection manner shown in FIG. 5, the route planning service may pre-store an optimal route that is on the map and that corresponds to each graphic in the list. In other words, the route planning service may pre-execute the procedure in FIG. 3, to obtain and store the optimal route corresponding to each graphic. After obtaining the target graphic, the search range, and the route length that are selected by the user, the route planning service may send the pre-stored optimal route to the map application.

In another possible implementation, for some simple graphics, results obtained after the route planning service performs abstraction processing on the simple graphics may be the same as original graphics. For this type of graphics, the route planning service may skip the abstract processing process, and directly obtain corresponding feature information based on the original graphics (the target graphics). For example, FIG. 21 is a diagram of an example of a graphic. As shown in FIG. 21, the user draws a constellation diagram of the Pisces (which may also be selected from the list, and this is not limited in this application). The route planning service may directly extract corresponding feature information based on the target graphic (the constellation diagram). For example, the feature information may include location information and connection information between key points. Optionally, the route planning service may perform abstraction processing on this type of graphics, and processing results of the graphics are same graphics as the target graphics.

It may be understood that, to implement the foregoing functions, the electronic device includes corresponding hardware and/or software modules for performing the function. In combination with example algorithm steps described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

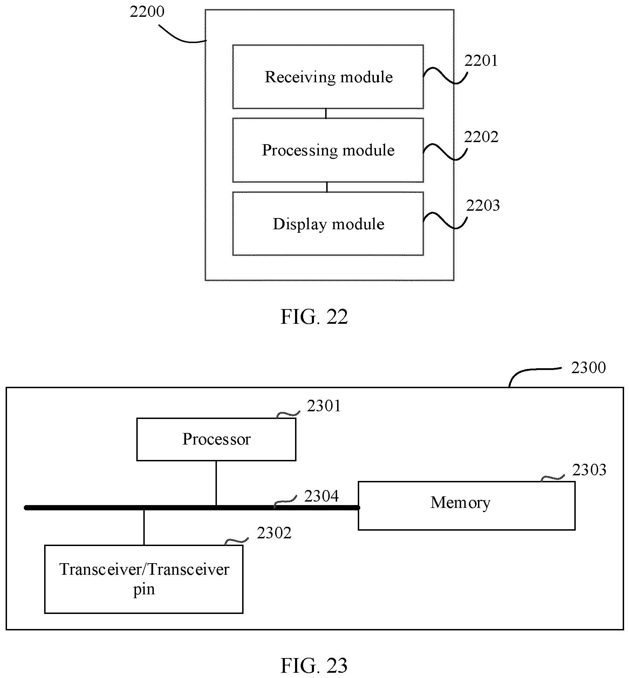

FIG. 22 is a diagram of an example of a structure of a route planning apparatus 2200. As shown in FIG. 22, the route planning apparatus 2200 includes but is not limited to a receiving module 2201, a processing module 2202, and a display module 2203. The receiving module 2201 is configured to receive a first operation, where the first operation indicates a target graphic. The processing module 2202 is configured to determine a target route based on the target graphic and a target region on a map. A similarity between a shape of the target route and a shape of the target graphic is greater than a preset threshold, the target route is in the target region, and the target region is set based on a location of an electronic device, or the target region is set based on a user operation. The display module 2203 is configured to display the target route on the map.

In a possible implementation, the processing module 2202 is specifically configured to: obtain feature information of the target graphic in response to the received first operation, where the feature information describes a graphic feature of the target graphic; and determine the target route based on the feature information of the target graphic and the target region on the map.

In a possible implementation, the processing module 2202 is specifically configured to: perform abstraction processing on the target graphic, to obtain a target abstract graphic of the target graphic, where the target abstract graphic is used to describe a key point in the target graphic or a connection relationship between key points in the target abstract graphic; and obtain the feature information based on the target abstract graphic.

In a possible implementation, the feature information includes at least one of the following: connection feature information, geometric feature information, angle feature information, size feature information, and location feature information.

In a possible implementation, the processing module 2202 is specifically configured to: perform matching on the target region on the map based on the feature information; and determine a successfully matched route as the target route.

In a possible implementation, the processing module 2202 is specifically configured to: perform matching on the target region on the map based on first feature information, to obtain at least one successfully matched first target subroute; and perform matching on a surrounding region of the at least one first target subroute based on second feature information, to obtain a successfully matched second target subroute, where the second target subroute is obtained by performing matching on a surrounding region of a third target subroute of the at least one first target subroute, the first feature information and the second feature information are partial information of the feature information, and the second target subroute and the third target subroute form the target route.

In a possible implementation, the processing module 2202 is specifically configured to: if a plurality of second target subroutes are obtained through matching, receive a second operation, where the second operation is used to specify the target route from a route including the plurality of second target subroutes; and determine the target route in response to the received second operation.

In a possible implementation, the processing module 2202 is specifically configured to: determine a plurality of candidate routes based on the target graphic and the target region on the map; and determine the target route from the plurality of candidate routes based on a preset condition, where the preset condition includes at least one of the following: the shape of the target route is the highest similar to the target abstract graphic, a length of the target route is the shortest, and the target route passes through a specified region; and the specified region is preset.

In a possible implementation, the receiving module 2201 is configured to receive the first operation performed on a first interface. The display module is configured to display the target route on a map on a second interface, where the second interface is different from the first interface.

In a possible implementation, the first operation indicates to draw the target graphic on the first interface.

In a possible implementation, the first interface is a gallery interface, and the gallery interface includes at least one locally stored graphic; and the receiving module is configured to determine the target graphic in response to the received first operation performed on the target graphic, where the target graphic is a graphic in the at least one graphic.

In a possible implementation, the first interface is a candidate graphic interface, and the candidate graphic interface includes at least one candidate graphic; and the receiving module is configured to determine the target graphic in response to the received first operation performed on a target candidate graphic, where the target candidate graphic is a graphic in the at least one candidate graphic.

In a possible implementation, the processing module 2202 is configured to: segment the target region, to obtain N target sub-regions, where N is a positive integer greater than 1; prioritize the N target sub-regions based on target feature information, where a sub-region that includes more routes corresponding to the target feature information has a higher priority, and the target feature information is partial information of the feature information; and perform matching on the N target sub-regions one by one based on the feature information and a priority sequence of the N target sub-regions.

In a possible implementation, the display module 2203 is configured to display, on the map on the second interface, a key point on the target route.

In a possible implementation, the display module 2203 is configured to display an entire route of the target route on the map on the second interface.

In a possible implementation, the processing module 2202 is configured to: obtain a current location of the electronic device; and determine the target region based on the current location of the electronic device and a target region range, where the target region range is a preset value, or the target region range is set by using a received region range setting operation.

In a possible implementation, the target region is set by using a latest received user operation.

In an example, FIG. 23 is a schematic block diagram of an apparatus 2300 according to an embodiment of this application. The apparatus 2300 may include a processor 2301 and a transceiver/transceiver pin 2302, and optionally, further include a memory 2303.

All components of the apparatus 2300 are coupled together through a bus 2304. In addition to a data bus, the bus 2304 further includes a power bus, a control bus, and a status signal bus. However, for clear description, various types of buses in the figure are marked as the bus 2304.

Optionally, the memory 2303 may be configured to store instructions in the foregoing method embodiments. The processor 2301 may be configured to: execute the instructions in the memory 2303, control a receive pin to receive a signal, and control a transmit pin to send a signal.

The apparatus 2300 may be the electronic device or a chip of the electronic device in the foregoing method embodiments.

All related content of the steps in the foregoing method embodiments may be cited in function descriptions of the corresponding functional modules. Details are not described herein again.

This embodiment further provides a computer storage medium. The computer storage medium stores computer instructions, and when the computer instructions are run on an electronic device, the electronic device is enabled to perform the foregoing related method steps to implement the method in the foregoing embodiments.

This embodiment further provides a computer program product. When the computer program product runs on a computer, the computer is enabled to perform the related steps, to implement the method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the methods in the foregoing method embodiments.

The electronic device, the computer storage medium, the computer program product, or the chip provided in embodiments is configured to perform the corresponding method provided above. Therefore, for beneficial effects that can be achieved, refer to the beneficial effects of the corresponding method provided above. Details are not described herein again.

Based on the foregoing descriptions of the implementations, a person skilled in the art may understand that for the purpose of convenient and brief description, division into the foregoing functional modules is merely used as an example for illustration. During actual application, the foregoing functions can be allocated to different functional modules for implementation as required, that is, an inner structure of an apparatus is divided into different functional modules to implement all or a part of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit. The integrated unit may be implemented in a form of hardware, or may be implemented in a form of software functional unit.

Any content in embodiments of this application and any content in a same embodiment can be freely combined. Any combination of the foregoing content falls within the scope of this application.

When the integrated unit is implemented in the form of software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

Methods or algorithm steps described in combination with the content disclosed in embodiments of this application may be implemented by hardware, or may be implemented by a processor by executing a software instruction. The software instruction may include a corresponding software module. The software module may be stored in a random access memory (random access memory, RAM), a flash memory, a read-only memory (read only memory, ROM), an erasable programmable read only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that facilitates transmission of a computer program from one place to another. The storage medium may be any available medium accessible to a general-purpose or a dedicated computer.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular sequence of the objects. For example, a first target object, a second target object, and the like are used for distinguishing between different target objects, but are not used for describing a specific sequence of the target objects.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In the descriptions of embodiments of this application, unless otherwise stated, "a plurality of" means two or more than two. For example, a plurality of processing units are two or more processing units, and a plurality of systems are two or more systems.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

## Claims

1. A route planning method, comprising:
receiving a first operation, wherein the first operation indicates a target graphic;
determining a target route based on the target graphic and a target region on a map, wherein a similarity between a shape of the target route and a shape of the target graphic is greater than a preset threshold, the target route is in the target region, and the target region is set based on a location of an electronic device, or the target region is set based on a user operation; and
displaying the target route on the map.

2. The method according to claim 1, wherein the determining a target route based on the target graphic and a target region on a map comprises:
obtaining feature information of the target graphic in response to the received first operation, wherein the feature information describes a graphic feature of the target graphic; and
determining the target route based on the feature information of the target graphic and the target region on the map.

3. The method according to claim 2, wherein the obtaining feature information of the target graphic in response to the received first operation comprises:
performing abstraction processing on the target graphic, to obtain a target abstract graphic of the target graphic, wherein the target abstract graphic is used to describe a key point in the target graphic or a connection relationship between key points in the target abstract graphic; and
obtaining the feature information based on the target abstract graphic.

4. The method according to claim 2 or 3, wherein the feature information comprises at least one of the following:
connection feature information, geometric feature information, angle feature information, size feature information, and location feature information.

5. The method according to claim 3, wherein the determining the target route based on the feature information of the target graphic and the target region on the map comprises:
performing matching on the target region on the map based on first feature information, to obtain at least one successfully matched first target subroute; and
performing matching on a surrounding region of the at least one first target subroute based on second feature information, to obtain a successfully matched second target subroute, wherein the second target subroute is obtained by performing matching on a surrounding region of a third target subroute of the at least one first target subroute, the first feature information and the second feature information are partial information of the feature information, and the second target subroute and the third target subroute form the target route.

6. The method according to claim 3, wherein the determining the target route based on the feature information of the target graphic and the target region on the map comprises:
determining a plurality of candidate routes based on the target graphic and the target region on the map; and
determining the target route from the plurality of candidate routes based on a preset condition, wherein
the preset condition comprises at least one of the following:
a similarity between the shape of the target route and the target abstract graphic is the highest, a length of the target route is the shortest, and the target route passes through a specified region, wherein the specified region is preset.

7. The method according to claim 1, wherein the receiving a first operation comprises:
receiving the first operation performed on a first interface; and
the displaying the target route on the map comprises:
displaying the target route on a map on a second interface, wherein the second interface is different from the first interface.

8. The method according to claim 7, wherein the first operation indicates to draw the target graphic on the first interface.

9. The method according to claim 7, wherein the first interface is a gallery interface, and the gallery interface comprises at least one locally stored graphic; and the receiving the first operation performed on a first interface comprises:
determining the target graphic in response to the received first operation performed on the target graphic, wherein the target graphic is a graphic in the at least one graphic.

10. The method according to claim 7, wherein the first interface is a candidate graphic interface, and the candidate graphic interface comprises at least one candidate graphic; and the receiving the first operation performed on a first interface comprises:
determining the target graphic in response to the received first operation performed on a target candidate graphic, wherein the target candidate graphic is a graphic in the at least one candidate graphic.

11. The method according to any one of claims 1 to 10, wherein the determining the target route based on the feature information and the target region comprises:
segmenting the target region, to obtain N target sub-regions, wherein N is a positive integer greater than 1;
prioritizing the N target sub-regions based on target feature information, wherein a sub-region that comprises more routes corresponding to the target feature information has a higher priority, and the target feature information is partial information of the feature information; and
performing matching on the N target sub-regions one by one based on the feature information and a priority sequence of the N target sub-regions.

12. A route planning apparatus, comprising:
a receiving module, configured to receive a first operation, wherein the first operation indicates a target graphic;
a processing module, configured to determine a target route based on the target graphic and a target region on a map, wherein a similarity between a shape of the target route and a shape of the target graphic is greater than a preset threshold, the target route is in the target region, and the target region is set based on a location of an electronic device, or the target region is set based on a user operation; and
a display module, configured to display the target route on the map.

13. The apparatus according to claim 12, wherein the processing module is specifically configured to:
obtain feature information of the target graphic in response to the received first operation, wherein the feature information describes a graphic feature of the target graphic; and
determine the target route based on the feature information of the target graphic and the target region on the map.

14. The apparatus according to claim 13, wherein the processing module is specifically configured to:
perform abstraction processing on the target graphic, to obtain a target abstract graphic of the target graphic, wherein the target abstract graphic is used to describe a key point in the target graphic or a connection relationship between key points in the target abstract graphic; and
obtain the feature information based on the target abstract graphic.

15. The apparatus according to claim 13 or 14, wherein the feature information comprises at least one of the following:
connection feature information, geometric feature information, angle feature information, size feature information, and location feature information.

16. The apparatus according to claim 14, wherein the processing module is specifically configured to:
perform matching on the target region on the map based on first feature information, to obtain at least one successfully matched first target subroute; and
perform matching on a surrounding region of the at least one first target subroute based on second feature information, to obtain a successfully matched second target subroute, wherein the second target subroute is obtained by performing matching on a surrounding region of a third target subroute of the at least one first target subroute, the first feature information and the second feature information are partial information of the feature information, and the second target subroute and the third target subroute form the target route.

17. The apparatus according to claim 14, wherein the processing module is specifically configured to:
determine a plurality of candidate routes based on the target graphic and the target region on the map; and
determine the target route from the plurality of candidate routes based on a preset condition, wherein
the preset condition comprises at least one of the following:
a similarity between the shape of the target route and the target abstract graphic is the highest, a length of the target route is the shortest, and the target route passes through a specified region, wherein the specified region is preset.

18. The apparatus according to claim 12, wherein
the receiving module is configured to receive the first operation performed on a first interface; and
the display module is configured to display the target route on a map on a second interface, wherein the second interface is different from the first interface.

19. The apparatus according to any one of claims 12 to 18, wherein the processing module is specifically configured to:
segment the target region, to obtain N target sub-regions, wherein N is a positive integer greater than 1;
prioritize the N target sub-regions based on target feature information, wherein a sub-region that comprises more routes corresponding to the target feature information has a higher priority, and the target feature information is partial information of the feature information; and
perform matching on the N target sub-regions one by one based on the feature information and a priority sequence of the N target sub-regions.

20. An electronic device, comprising:
one or more processors;
a memory; and
one or more computer programs, wherein the one or more computer programs are stored in the memory, and when the computer program is executed by the one or more processors, the electronic device is enabled to perform the method according to any one of claims 1 to 11.

21. A computer storage medium, comprising computer instructions, wherein when the computer instructions are run on an electronic device, the electronic device is enabled to perform the method according to any one of claims 1 to 11.

22. A computer program product, wherein when the computer program product runs on a computer, the computer is enabled to perform the method according to any one of claims 1 to 11.
